(19) Europäisches Patentamt
European Patent Office
Office européen des brevets

(11) **EP 1 691 624 B1**

(12) **EUROPEAN PATENT SPECIFICATION**

(45) Date of publication and mention
of the grant of the patent:
**22.09.2010 Bulletin 2010/38**

(51) Int Cl.:
***A23G 9/20*** *(2006.01)*

(21) Application number: **04790963.5**

(22) Date of filing: **27.10.2004**

(86) International application number:
**PCT/EP2004/012191**

(87) International publication number:
**WO 2005/046346 (26.05.2005 Gazette 2005/21)**

(54) **FROZEN AERATED CONFECTION**

GEFRORENES AUFGESCHLAGENES KONFEKTIONSPRODUKT

CONFISERIE CONGELEE AEREE

(84) Designated Contracting States:
**AT BE BG CH CY CZ DE DK EE ES FI FR GB GR HU IE IT LI LU MC NL PL PT RO SE SI SK TR**

(30) Priority: **14.11.2003 EP 03257212**

(43) Date of publication of application:
**23.08.2006 Bulletin 2006/34**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IT LI LU MC NL PL PT RO SE SI SK TR**

(72) Inventors:
• **JUDGE, David John,**
**Unilever R & D Colworth**
**Bedford,**
**Bedfordshire MK44 1LQ (GB)**
• **MALONE, Mark Emmett,**
**Fonterra Research Centre**
**Palmerston North**
**(NZ)**

(74) Representative: **Clarke, Christopher John et al**
**Unilever Patent Group**
**Colworth House**
**Sharnbrook**
**Bedford MK44 1LQ (GB)**

(56) References cited:
**EP-A- 0 147 483        GB-A- 2 357 954**
**US-A- 3 949 102        US-A- 4 434 186**
**US-A- 4 452 824        US-A1- 2003 003 215**
**US-A1- 2003 134 024**

• **MARSHALL R.T., ARBUCKLE W.S.: "Ice Cream; Fifth Edition" 2000, ASPEN PUBLISHERS, INC. , GAITHERSBURG, MD, US, PAGES 22,23,28-31,34,35,46,47,58-75,238,239 , XP002278685 ISBN: 0-8342-1917-4 the whole document**
• **VAN GENNIP A.H.M.: "Einfluß der verschiedenen Eiweisse auf die Qualität des Speiseeis" DEUTSCHE MOLKEREI-ZEITUNG, vol. 101, no. 29, 1980, pages 1082,1084-1088, XP009030078 münchen ISSN: 0938-9369**

Remarks:
The file contains technical information submitted after the application was filed and not included in this specification

**Description**

**Technical Field of the Invention**

This invention relates to a frozen aerated confection. More specifically, the invention relates to an ice cream product which is soft and extensible at -18°C.

**Background to the Invention**

US patent application publication 2001/0031304 A (and its equivalent GB 2 357 954) discloses a frozen aerated confection which exhibits an extensible character similar to that shown by a Turkish artisenal type of ice cream known as *Maras. Maras* ice cream comprises sahlep which is an extract from the roots of orchids and it is thought that it is sahlep which contributes to the extensible quality of *Maras* ice cream.

In US 2001/0031304. A, the frozen aerated confection does not comprise sahlep or any other product from orchids. Preferably, the confection comprises a polysaccharide such as xanthan gum, guar gum, or sodium carboxymethyl cellulose (CMC). In addition the confection preferably comprises one or more proteins selected from milk, soya or whey protein. The overrun of the confection is in the range 15-80%.

The inventors have observed that when the frozen aerated confection disclosed in US 2001/0031304 A is removed from a domestic freezer at -18°C, it is not apparent to the consumer that the confection has an extensible quality because it is too hard. The extensible character of the confection only becomes apparent on softening the product by warming it to -12°C.

A further problem with the confection disclosed in US 2001/0031304 A is that the extensibility generally decreases as the overrun increases beyond 30%.

US 2003/0134024 discloses a frozen aerated confection having an overrun of above 80% and below 250%, and containing less than 0.5% w/w glycerol, freezing point depressants in an amount of between 25% and 37% w/w, and between 2 and 12% fat, wherein the freezing point depressants have a number average molecular weight <M>n of less than 300 have a soft structure when eaten at -18° C.

US 3,949,102 discloses a frozen dessert having good texture and eating quality made by mixing and then freezing from about 7% to about 18% protein solids and from about 10% to about 40% saccharides with from about 5% to about 25% of a triglyceride fat or oil, from about 0.2% to about 2% of a primary emulsifier which is either a polyglycerol ester or a sorbitan ester, from about 0.5% to about 15% by weight of the primary emulsifier of a secondary emulsifier which is an edible anionic surfactant, and with from about 45% to about 65% water.

EP 147,483 (and its equivalent US 4,434,186) discloses a process for preparing a stable aerated frozen food product wherein water, fat, protein, emulsifier and stabilizer are blended together to form a mix which is homogenized to form an oil-in-water emulsion and is subsequently whipped under freezing conditions.

US 2003/0003215 discloses a stable soft frozen dessert composition having about 15 to about 35 weight percent of a sweetener composition which comprises about 30 to about 90 weight percent sucrose and about 10 to about 70 weight percent maltose with a ratio of sucrose to maltose (sucrose: maltose) greater than 0.5:1.

**Tests and Definitions**

The number average molecular weight ($M_n$) is a number weighted averaged molecular weight defined by the following equation:

$$M_n = \frac{\Sigma w_i}{\Sigma (w_i / M_i)} = \frac{\Sigma N_i M_i}{\Sigma N_i}$$

where $w_i$ is the mass of species i, $M_i$ is the molar mass of species i and $N_i$ is the number of moles of the species i of molar mass $M_i$. The mean number average molecular weight is the number average molecular weight of a blend of two or more, in this case, freezing point depressants.

Overrun is defined by the following equation

$$overrun = \frac{(volume.of.ice.cream) - (volume.of.premix.at.ambient.temperature)}{(volume.of.premix.at.ambient.temperature)} \times 100$$

Freezing point depressants as defined in this invention consist of: monosaccharides; disaccharides; oligosaccharides containing from three to ten monosaccharide units joined in glycosidic linkage; corn syrups with a dextrose equivalent (DE) of greater than 20 preferably > 40 and more preferably > 60; glycerol; erythritol; arabitol; xylitol; sorbitol; mannitol; lactitol; malitol; or any combination thereof.

Monosaccharides and disaccharides include sucrose, arabinose, ribose, xylose, dextrose, galactose, mannose, fructose, lactose, maltose, raffinose and stachyose.

Corn syrups are complex multi-component sugar mixtures and the dextrose equivalent is a common industrial means of classification. Since they are complex mixtures their number average molecular weight ($M_n$) can be calculated from the equation below (Journal of Food Engineering, 33 (1997) 221-226),

$$DE = \frac{100}{M_N/180.16}$$

Extensible confection refers to a frozen aerated confection with an extensibility of at least 30%. At an extensibility of less than 30%, the consumer does not generally perceive the confection as being extensible.

Measurement of extensibility

In the examples that follow, the extensibility was measured using the following procedure, which is illustrated with reference to the figures in which:

Figure 1 shows a cutter used to stamp a test piece;
Figure 2 shows a test piece grip;
Figure 3 shows the arrangement of two grips with a metal gauge; and
Figure 4 shows a test piece broken at the shoulder.

A 500 ml block of ice cream of dimensions 92 mm x 38 mm x 140 mm was removed from a cold store at -25°C and allowed to soften at 25°C. The block was cut into 10 mm wide strips using a serrated knife and following the pre-drawn guidelines on the block. Thus from one block, 14 strips having dimensions of 92 mm x 38 mm x 10 mm were cut off.

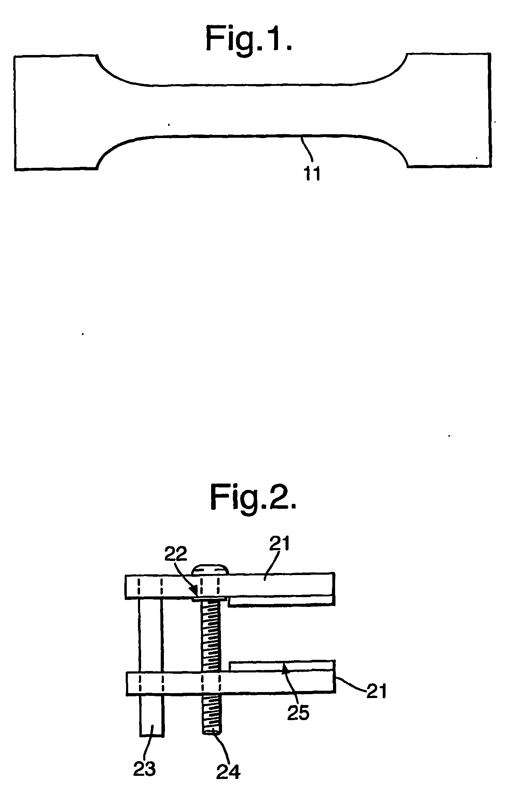

The strips were placed on a silicon paper covered portable hard flat surface, for example a hard plastic chopping board. A shaped test piece was then stamped from each of the strips using a cutter which is shown in Figure 1. The cutter has an overall length of 80 mm and a width at its widest point adjacent the ends of 23 mm. An indented area (11) is defined substantially symmetrical about the middle point of the length of the cutter. The indented area has a width of 10 mm and a length of 60 mm.

The cutter was warmed in hot water at 50-60°C and at least 6 test pieces stamped from the aforementioned strips. The test pieces were then returned to a cold store at -25°C on the silicon paper and hardboard for a minimum of 90 minutes. As the test pieces should not be held at 25°C for more than 13 minutes, the time for cutting and stamping did not exceed 8 minutes.

The test pieces were then removed from the cold store at -25°C and placed into test grips. The test grip design is shown in Figure 2 and comprises 2 Perspex™ plates (21) joined together with a C clip (22) and a stainless steel pin (23), the C clip (22) comprising an M4 screw (24). Mounted on the opposing faces of each Perspex™ plate (21) is a rubber pad (25), each of which has a dimpled surface. The distance from the distal end of the rubber pad to the C clip (22) is 25 mm and the spacing between the rubber pads (25) is 23 mm. The width of each rubber pad (25) is 18 mm. The rubber pads (25) comprise Foulds conveyor belt material model V100 two-ply polyester with a polyvinyl chloride top surface. The rubber pads (25) are attached to the Perspex™ plates (21) with adhesive whereby the dimpled surface of each rubber pad (25) is free to grip the test pieces.

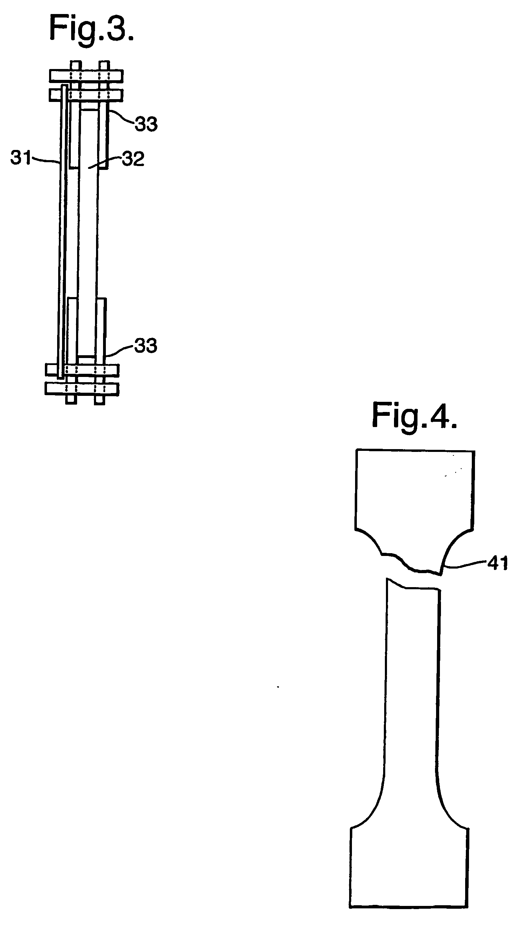

One test grip (33) was placed on each end of the test piece (32) as shown in Figure 3. The rubber pads (25) were closed to a gap no smaller than 8 mm. A metal gauge (31) was used to ensure that the pair of grips were correctly located ensuring the distance between the two grips was 60 mm.

In Figure 3, the metal gauge (31) is shown attached to a pair of test grips (33) holding a test piece (32). The metal gauge (31) has a total length of 136 mm and sets the distance between the screws of each C clip at 120 mm. The test piece, test grips and metal gauge were then placed in a portable freezer set at -18°C for 10-120 minutes.

Testing was conducted on an Instron 4501 mechanical test machine fitted with a 10 N load cell. The test was conducted within a temperature control cabinet set to -18°C. After the test piece was attached to the mechanical test machine via the test grips, the metal gauge was removed and the test piece allowed to equilibrate at -18°C for 2 minutes before the test was performed.

The test was performed by pulling the test piece apart with the test grips moving away from each other at a relative speed of 50 mm per minute. The force (F) required to pull the test piece and the displacement of the test grips ($\Delta L$) were continually recorded during the test. Any test in which the test piece slipped within either grip or broke at the shoulder (41) of the test piece as shown in Figure 4 was rejected. The test was completed when the test piece is broke. A minimum of 6 valid tests was required to provide a measurement of extensibility for a test ice cream.

The displacement of the test grips at which the force drops to zero after passing through a maximum load is the point at which the failure of the test piece occurs.

A percentage strain to failure $E_f$ is defined as the displacement to failure divided by the original gauge length of test piece ($L_0$) multiplied by 100. The original gauge length is that portion of the test piece which is 10 mm wide, thus the original gauge length is 60 mm. The mean percentage strain to failure of at least 6 valid tests defines the extensibility of the ice cream under test.

Measurement of mechanical firmness

Mechanical firmness was measured in accordance with the following procedure.

Mechanical firmness provides an indication of softness. Mechanical firmness is given by the maximum true stress (Pa) which can be obtained from a true stress versus true strain curve (Richards, C.W. (1961) Engineering materials science. Brooks/Cole Publishing, Belmont, MA; Green, D.J. (1998) An introduction to the mechanical properties of ceramics. Cambridge University Press, Cambridge, UK).

The true stress ($\sigma_t$) can be calculated from the force measurements obtained from the extensibility test and is given by

$$\sigma_t = F(L_0 + \Delta L)/(A_0 L_0)$$

where $A_0$ is the cross-sectional area of the original gauge length.

The true strain ($\varepsilon_t$) is given by

$$e_t = \ln((L_0 + \Delta L)/L_0)$$

Determination of the texture profile

The texture profile was determined by a sensory panel of 10 or more trained assessors.

The technique employed combined aspects of both the Spectrum™ and Texture Profile™ methodologies (Lawless, H.T. and Heymann, H. (1999) *Sensory evaluation of food: principles and practices.* Chapman & Hall, London; Meilgaard, M., Civille, G.V. and Carr, B.T. (1991) Sensory evaluation techniques - 2nd edition. CRC Press, London). The technique is a descriptive method to describe the textural characteristics of most food products during consumption. The eating procedure, technical lexicon and scales are all standardised, with a number of reference products along each scale to enable the quantitative rating of intensity relative to all foods.

The trial involved a three replicate assessment. Samples were served in plastic pots at -18°C and the trained assessors were asked to assess the attributes listed in table 1 hereinbelow in accordance with the procedure set out in the same table. The data was analysed using ANOVA (analysis of variance) and multiple comparison testing. The accepted significance level was 5% or p=<0.05.

In relation to the firmness of the ice creams, the most relevant attributes are firmness (semi-solid) and hardness/firmness (solid).

Table 1: Sensory Attributes

| Assessment | First manipulation | First manipulation |
|---|---|---|
| Attribute | Firmness | Hardness/Firmness |
| Solid / semi-solid | semi-solid | solid |
| Definition | Force required to compress between tongue and palate | Force required to bite through the sample |
| Evaluation Procedure | Place ½ tsp of sample in mouth and compress between tongue and palate | Bite through the sample with the incisors |
| Anchors | Low (soft)<br>High (firm) | Low (very soft)<br>High (very hard) |
| References | Whipped cream: 2<br>Cream cheese: 8-9<br>Paté: 14 | Cream cheese: 1<br>Hard mature cheddar: 7.5<br>Almond: 11<br>Hard candy: 14.5 |

**Brief Description of the Invention**

This invention overcomes the aforementioned problems by providing a frozen aerated confection as in claim 1.

Without wishing to be bound by theory, the inventors have observed that the softness of a frozen aerated confection comprising freezing point depressants in a total amount of 26-40% weight by weight, the freezing point depressants having a mean number average molecular weight of less than or equal to 320, is a function of the viscosity of the non-frozen matrix phase as well as the phase volume of ice. Since the viscosity of the non-frozen matrix phase and the ice phase volume are, in part, a function of the mean number average molecular weight of the freezing point depressants, the softness of the confection is, in part, determined by the mean number average molecular weight of the freezing point depressants.

When the mean number average molecular weight of the freezing point depressants is much in excess of 320 at a total freezing point depressant amount of 26-40% weight by weight, the extensible character of the confection is maintained but is not apparent to the consumer at -18°C because the confection is too hard.

Thus by maintaining the total amount of freezing point depressants in the range of 26-40% weight by weight and controlling the mean number average molecular weight of the freezing point depressants at less than or equal to 320, the confection is soft enough when, removed directly from a domestic freezer, for the consumer to perceive any extensible character.

Preferably the total freezing point depressant range is 28-39% weight by weight and the mean number average molecular weight range is 200 to 300. In particular, the total freezing point depressant range is 29-36% weight by weight and the mean number average molecular weight range is 200 to 250.

The extensibility of the confection is preferably at least 40% at -18°C, and more preferably at least 50% at -18°C.

Preferably the freezing point depressants comprise at least 98% weight by weight monosaccharide, disaccharide, oligosaccharide and corn syrup. In particular the monosaccharide, disaccharide and corn syrup is selected from the group consisting of sucrose, dextrose, lactose, fructose, maltose, corn syrup of DE greater than or equal to 53 and mixtures thereof.

Preferably the freezing point depressants comprise at least 98% weight by weight monosaccharide, disaccharide, oligosaccharide.

Preferably the confection comprises an effective amount of at least one protein. The protein is selected from the group consisting of milk protein, soya protein, whey protein and mixtures thereof.

The frozen aerated confection has an overrun in the range 30-120%. Preferably the frozen aerated confection has an overrun in the range 30-90%. Equally preferably the frozen aerated confection has an overrun in the range 80%-120%.

Desirably the protein is at a level of 1-5% weight by weight and is selected from the group consisting of milk protein, soya protein, whey protein and mixtures thereof.

**Examples**

Ice cream was prepared to the formulations set out in table 2 hereinbelow and tested in accordance with the test procedures set forth hereinabove.

Comparative example 1 was a non-extensible ice cream and comparative example 2 was a standard extensible ice cream.

The mean number average molecular weight of the freezing point depressants (FPD) were calculated from the equation set forth hereinabove. Total protein content (not shown) and freezing point depressant content (not shown) were also calculated by simple arithmetic.

Ice creams were prepared to the formulations set out in table 2.

Table 2: Ice Cream Formulations

|  | Comparative example 1 | Comparative example 2 | Example 1 | Example 2 | Example 3 |
|---|---|---|---|---|---|
| Ingredients | % | % | % | % | % |
| CNO | 9 | 8.2 | - | - | 5 |
| Butterfat | - | - | 4 | 4 | - |
| SMP | 7.4 | 7.88 | 8 | 8 | 8 |
| Whey solids | 2.6 | - | - | - | - |
| MGP | 0.39 | 0.4 | 0.15 | 0.15 | 0.15 |
| Sucrose | 13.9 | 14 | 8.125 | 8.125 | 12.5 |
| Dextrose | - | - | 19.35 | 23.5 | 19.4 |
| Fructose | - | - | - | - | - |
| Glycerol | - | - | - | - | - |
| 65 DE corn syrup | - | 8 | - | - | - |
| LF9 corn syrup (63 DE) | 4.6 | - | - | - | - |
| MD40 | - | 2 | - | - | - |
| Lactose | - | - | 4.375 | - | - |
| LBG | 0.284 | - | - | - | - |
| Carrageenan C | 0.041 | - | - | - | - |
| Guar gum | - | 0.7 | 0.72 | 0.72 | 0.72 |
| Flavour | 0.285 | - | - | - | 0.1125 |
| Beta Carotene | 0.0013 | - | - | - | - |
| Turmeric | - | - | - | - | 0.13 |
| Colour | - | - | - | - | 0.15 |
| Water | 61.4987 | 58.82 | 55.255 | 55.25 | 53.875 |
| Total FPD | 22.69 | 26.3 | 34.25 | 33.65 | 34.29 |
| Total protein | 3.37 | 2.76 | 2.8 | 2.8 | 2.8 |
| FPD mean Mn | 332.0 | 329.1 | 234.1 | 217.8 | 234 |

Table 2: Ice Cream Formulations

|  | Example 4 | Example 5 | Example 6 | Example 7 | Example 8 |
|---|---|---|---|---|---|
| Ingredients | % | % | % | % | % |
| CNO | - | - | - | - | - |
| Butterfat | 4 | 4 | 4 | 4 | 4 |
| SMP | 8 | 8 | 8 | 8 | 8 |
| Whey solids | - | - | - | - | - |
| MGP | 0.15 | 0.15 | 0.15 | 0.15 | 0.15 |
| Sucrose | - | - | 29 | 20.7 | 4.0625 |
| Dextrose | - | - | - | - | 19.375 |
| Fructose | 28.5 | 19.7 | 5.94 | 4.446 | - |
| Glycerol | 2 | 2 | - | - | - |
| 65 DE corn syrup | - | - | - | - | - |

(continued)

| | Example 4 | Example 5 | Example 6 | Example 7 | Example 8 |
|---|---|---|---|---|---|
| Ingredients | % | % | % | % | % |
| LF9 corn syrup (63 DE) | - | - | - | - | 10.2 |
| MD40 | - | - | - | - | - |
| Lactose | - | - | - | - | - |
| LBG | - | - | - | - | - |
| Carrageenan C | - | - | - | - | - |
| Guar gum | 0.72 | 0.72 | 0.72 | 0.72 | 0.72 |
| Flavour | - | - | - | - | - |
| Beta Carotene | - | - | - | - | - |
| Turmeric | - | - | - | - | - |
| Colour | - | - | - | - | - |
| Water | 56.62 | 65.42 | 52.18 | 61.974 | 53.4825 |
| Total FPD | 34.66 | 25.86 | 39.10 | 29.30 | 33.79 |
| Total protein | 2.80 | 2.80 | 2.80 | 2.80 | 2.80 |
| FPD mean Mn | 180.5 | 180.6 | 301.0 | 301.0 | 224.5 |

CNO ≡ coconut oil
LF9 glucose syrup (63 DE) ≡ 63 DE corn syrup at 78% weight by weight solids
SMP ≡ skimmed milk powder (52% weight by weight lactose and 35% weight by weight milk protein)
MGP ≡ monoglyceryl palmitate (emulsifier)
MD40 ≡ DE 40 corn syrup at 95% weight by weight solids
LBG ≡ locust bean gum
65 DE corn syrup ≡ 65 DE corn syrup at 80% weight by weight solids Whey solids ≡ Esprion 300 (52% weight by weight lactose and 30% weight by weight whey protein)
Dextrose ≡ dextrose monohydrate

The ice creams were prepared in accordance with the following procedure.

All the ingredients were blended together in an agitated heated mix tank after which the blend was subjected to high shear mixing at a temperature of at least 65°C for 2 minutes in order to hydrate the stabilisers. Excessive temperature was avoided to prevent damage to heat labile components and the formation of cooked off flavours.

The blend was then subjected to homogenisation to reduce the bulk of the fat droplets to below 1μm in diameter by homogenising at a pressure of 150bar and a temperature of 70°C using a valve homogeniser.

As examples 1 and 2 and comparative example 2 were rather viscous due to their high levels of guar, they were heated to 80°C prior to homogenisation to facilitate processing thereby enabling the blends to flow more readily through the pasteuriser and the homogeniser.

In order to conform to public health requirements the blend was pasteurised by heated the blend to 83°C and holding for 20 seconds. The pasteurised blend was then rapidly cooled to a chill temperature of 4°C. The blend was then held at 4°C to age.

The blend was then frozen using a continuous freezer known as a votator or scrape surface heat exchanger. These devices freeze the blend and incorporate sufficient air to deliver the desired overrun. The ice cream was extruded at -10°C.

Following freezing the ice cream was subjected to hardening by blast freezing to -35°C thereby reducing the temperature of the ice cream to close to the final storage temperature of -25°C.

## Results

The results of extensibility tests are shown in table 3. Both example 1 and comparative example 2 were prepared at 30% overruns. Comparative example 1 was prepared at 60% overrun.

Table 3: Extensibility Measurements

|  | Overrun (%) | % Mean Strain to Failure | Standard Deviation |
|---|---|---|---|
| Comparative example 2 | 30 | 134 | 72 |
| Example 1 | 30 | 155 | 65 |
| Example 2 | 30 | 83 | 32 |
| Comparative example 1 | 60 | 13 | 2 |

The results show that the extensibility of example 1 is comparable to comparative example 2, which is the standard extensible ice cream. Comparative example 1, which is the non-extensible ice cream, exhibited very low values of extensibility.

Extensibility measurements were also carried out on example 1 and comparative example 2 at overruns of 30%, 50%, 100% and 120%. The results are summarised in table 4 hereinbelow. (The sample of comparative example 2 was produced using the same formulation but on a different occasion to the sample of comparative example 2 whose measurement results were shown in table 3.)

Table 4: Extensibilty as a Function of Overrun

|  | Overrun (%) | % Mean Strain to Failure | Standard Deviation |
|---|---|---|---|
| Comparative Example 2 | 30 | 113 | 31 |
|  | 50 | 60 | 13 |
|  | 100 | 50 | 27 |
|  | 120 | 54 | 21 |
| Example 1 | 30 | 155 | 65 |
|  | 50 | 124 | 44 |
|  | 100 | 82 | 24 |
|  | 120 | 125 | 56 |

In table 4, it is apparent how increasing the overrun leads to a decrease in the extensibility of comparative example 2 (the standard extensible ice cream). In comparison, and rather surprisingly, the extensibility of example 1 remains relatively stable on increasing the overrun.

The results of the mechanical firmness tests are shown in table 5. The data recorded during the extensibility tests was used to calculate the true stress ($\sigma_t$) and true strain ($\varepsilon_t$) values in accordance with the method set forth hereinabove.

Table 5: Maximum True Stress Measurements (in kPa)

|  | Comparative Example 1 | Comparative Example 2 (30% overrun) | | Example 1 (30% overrun) | | Example 2 (30% overrun) |
|---|---|---|---|---|---|---|
|  |  | Sample 1 | Sample 2 | Sample 1 | Sample 2 |  |
|  | 14.9 | 17.6 | 17.7 | 4.10 | 4.56 | 4.04 |
|  | 27.1 | 16.1 | 16.1 | 3.83 | 5.12 | 3.83 |
|  | 14.4 | 24.4 | 15.4 | 3.67 | 4.26 | 3.67 |
|  | 16.2 | 21.8 | 18.4 | 4.03 | 3.48 | 4.10 |
|  | 19.6 | 15.5 | 11.3 | 4.53 | 5.41 | 4.52 |
|  | 17.6 | 18.3 | 11.6 | 5.13 | 6.32 | 5.13 |
|  | 28.8 | 11.1 | 24.4 | 8.04 | 9.55 | 3.62 |
|  |  | 11.6 | 21.8 | 6.73 |  | 8.04 |
|  |  | 9.71 |  |  |  | 6.69 |
| Average | 19.8 | 16.2 | 17.1 | 5.01 | 5.53 | 4.85 |
| Standard deviation | 5.86 | 4.94 | 4.55 | 1.57 | 1.99 | 1.54 |

Table 5 shows that examples 1 and 2 are softer than comparative example 2 (the standard extensible ice cream} at -18°C. Examples 1 and 2 are also softer than comparative example 1 at -18°C.

The results of the texture profile are summarised in table 6 hereinbelow.

Table 6: Texture Profile Measurements

| Attribute | Comparative Example 1 | Comparative Example 2 (30% overrun) | Example 1 (30% overrun) | Comparative Example 2 (100% overrun) | Maximum least significant difference |
|---|---|---|---|---|---|
| Firmness (semi-solid) | 9.19 | 11.16 | 6.52 | 5.58 | 1.3 |
| Hardness/ firmness (solid) | 3.61 | 5.47 | 2.47 | 2.22 | 1.09 |

Example 1 at 30% and 100% overrun were not significantly different from each other but were significantly less firm than the comparative examples.

Examples 3 to 8 were tested non-mechanically (manually) and observed to display extensible character at -18°C.

**Claims**

1. A frozen aerated confection having an overrun in the range 30-120% comprising freezing point depressants in a total amount above 26% and below 40% weight by weight, the freezing point depressants having a mean number average molecular weight of less than or equal to 320, **characterized in that** the frozen aerated confection additionally comprises guar gum at a level of 0.4-0.9% weight by weight, and an effective amount of at least one protein.

2. A frozen aerated confection according to claim 1 wherein the protein is at a level of 1-5% weight by weight and is selected from the group consisting of milk protein, soya protein, whey protein and mixtures thereof.

3. A frozen aerated confection according to claim 1 or claim 2 wherein the total freezing point depressant range is 28-39% weight by weight and the mean number average molecular weight range is 200 to 300.

4. A frozen aerated confection according to claim 3 wherein the total freezing point depressant range is 29-36% weight by weight and the mean number average molecular weight range is 200 to 250.

5. A frozen aerated confection according to any one of claims 1 to 4 wherein the freezing point depressants comprise at least 98% weight by weight monosaccharide, disaccharide, oligosaccharide and corn syrup.

6. A frozen aerated confection according to claim 5 wherein the monosaccharide, disaccharide and corn syrup is selected from the group consisting of sucrose, dextrose, lactose, fructose, maltose, corn syrup of DE greater than or equal to 53, and mixtures thereof.

7. A frozen aerated confection according to any of claims 1 to 6 wherein the confection has an overrun in the range 30-90%.

**Patentansprüche**

1. Gefrorenes aufgeschlagenes Konfekt, das einen Aufschlag im Bereich von 30-120 % hat, das Gefrierpunktserniedrigungsmittel in einer Gesamtmenge von über 26 Gewichts-% und unter 40 Gewichts-% umfasst, wobei die Gefrierpunktserniedrigungsmittel ein durchschnittliches zahlenmittleres Molekulargewicht von kleiner als oder gleich 320 haben, **dadurch gekennzeichnet, dass** das gefrorene aufgeschlagene Konfekt zusätzlich Guargummi in einer Konzentration von 0,4-0,9 Gewichts-% und eine effektive Menge wenigstens eines Proteins umfasst.

2. Gefrorenes aufgeschlagenes Konfekt gemäß Anspruch 1, wobei das Protein eine Konzentration von 1-5 Gewichts-% hat und aus der Gruppe, bestehend aus Milchprotein, Sojaprotein, Molkeprotein und Gemischen davon, ausgewählt ist.

3. Gefrorenes aufgeschlagenes Konfekt gemäß Anspruch 1 oder Anspruch 2, wobei der gesamte Gefrierpunktserniedrigungsmittel-Bereich 28-39 Gewichts-% ist und der Bereich des durchschnittlichen zahlenmittleren Molekulargewichts 200 bis 300 ist.

4. Gefrorenes aufgeschlagenes Konfekt gemäß Anspruch 3, wobei der gesamte Gefrierpunktserniedrigungsmittel-Bereich 29-36 Gewichts-% ist und der Bereich des durchschnittlichen zahlenmittleren Molekulargewichts 200 bis 250 ist.

5. Gefrorenes aufgeschlagenes Konfekt gemäß einem der Ansprüche 1 bis 4, wobei die Gefrierpunktserniedrigungsmittel wenigstens 98 Gewichts-% Monosaccharid, Disaccharid, Oligosaccharid und Maissirup umfassen.

6. Gefrorenes aufgeschlagenes Konfekt gemäß Anspruch 5, wobei das Monosaccharid, Disaccharid und der Maissirup ausgewählt ist aus der Gruppe, bestehend aus Saccharose, Dextrose, Lactose, Fructose, Maltose, Maissirup mit einem DE-Wert von größer als oder gleich 53, und Gemischen davon.

7. Gefrorenes aufgeschlagenes Konfekt gemäß einem der Ansprüche 1 bis 6, wobei das Konfekt einen Aufschlag im Bereich von 30-90 % hat.

**Revendications**

1. Confiserie congelée aérée présentant un foisonnement dans la plage de 30 à 120 % comprenant des additifs d'abaissement du point de congélation à une quantité totale supérieure à 26 % et inférieure à 40 % en poids, les additifs d'abaissement du point de congélation présentant une masse moléculaire moyenne en nombre inférieure ou égale à 320, **caractérisée en ce que** la confiserie congelée aérée comprend de plus de la gomme de guar à un taux de 0,4 à 0,9 % en poids, et une quantité efficace d'au moins une protéine.

2. Confiserie congelée aérée selon la revendication 1, dans laquelle la protéine se trouve à un taux de 1 à 5 % en poids et est choisie dans le groupe constitué par une protéine de lait, une protéine de soja, une protéine lactosérique, et leurs mélanges.

3. Confiserie congelée aérée selon la revendication 1 ou la revendication 2, dans laquelle la plage totale d'additif d'abaissement du point de congélation est de 28 à 39 % en poids et la plage de masse moléculaire moyenne en nombre est de 200 à 300.

4. Confiserie congelée aérée selon la revendication 3, dans laquelle la plage totale d'additif d'abaissement du point de congélation est de 29 à 36 % en poids et la plage de masse moléculaire moyenne en nombre est de 200 à 250.

5. Confiserie congelée aérée selon l'une quelconque des revendications 1 à 4, dans laquelle les additifs d'abaissement du point de congélation comprennent au moins 98 % en poids de monosaccharide, de disaccharide, d'oligosaccharide et de sirop de maïs.

6. Confiserie congelée aérée selon la revendication 5, dans laquelle le monosaccharide, le disaccharide et le sirop de maïs sont choisis dans le groupe constitué par le saccharose, le dextrose, le lactose, le fructose, le maltose, le sirop de maïs ayant un DE supérieur ou égal à 53, et leurs mélanges.

7. Confiserie congelée aérée selon l'une quelconque des revendications 1 à 6, dans laquelle la confiserie présente un foisonnement dans la plage de 30 à 90%.

# Fig.1.

11

# Fig.2.

22    21

23    24    25    21

# Fig.3.

31    32

33

33

# Fig.4.

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010031304 A
- GB 2357954 A
- US 20030134024 A
- US 3949102 A
- EP 147483 A
- US 4434186 A
- US 20030003215 A

**Non-patent literature cited in the description**

- *Journal of Food Engineering,* 1997, vol. 33, 221-226
- **Richards, C.W.** Engineering materials science. Brooks/Cole Publishing, 1961
- **Green, D.J.** An introduction to the mechanical properties of ceramics. Cambridge University Press, 1998